# EUROPEAN PATENT APPLICATION

(11) **EP 3 441 632 A1**
(43) Date of publication of application: **13.02.2019**
(21) Application number: 18176259.2
(22) Date of filing: 06.06.2018
(51) Int. Cl.: F16C 1/26

(54) **IMPROVED STRUCTURE OF BICYCLE CABLE HOUSING**

(30) Priority: 07.08.2017 TW 106211621 U
(71) Applicant: Li-Da Industrial Co., Ltd, 500 Changhua City, Changhua County (TW)
(72) Inventor: LI, Zheng-Bang, 500 Changhua City, Changhua County (TW)
(74) Representative: Viering, Jentschura & Partner mbB Patent- und Rechtsanwälte

(57) **Abstract**

An improved structure of bicycle cable housing in accordance with an embodiment of the present invention is provided, including an inner tube (10) and an aluminum layer (20). The aluminum layer (20) is provided around an outer wall (12) of the inner tube (10), and formed by a wound aluminum metal strip, such that the weight of the bicycle cable housing is decreased. The aluminum metal strip is wound around the inner tube (10) along an axial direction to form a plurality of protective segments (21). Two neighboring protective segments (21) are in contact with each other but not overlapped. Therefore, the user is able to easily control the direction and balance of the bicycle during operation.

## Description

### BACKGROUND OF THE INVENTION

### 1. Field of the Invention:

The present invention relates to bicycle cable housings, and more particularly, to an improved structure of a bicycle cable housing.

### 2. Description of the Related Art:

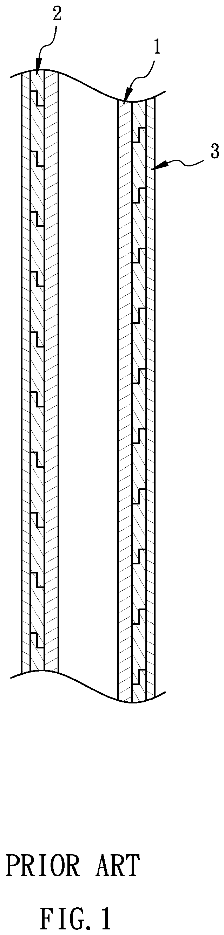

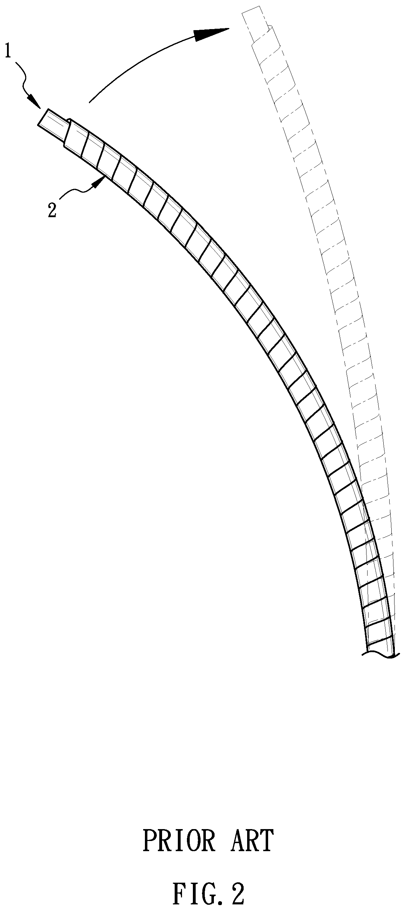

Referring to **Fig.1** and **Fig.2****,** a conventional bicycle cable housing is internally provided with an inner tube **1,** which is a hollow tube body, a metal layer **2,** and a protective layer **3.** The metal layer **2** is disposed between the inner tube **1** and the protective layer **3.** The metal layer **2** is formed of a metal strip wound around the outer surface of the inner tube **1,** so as to form a plurality of protective segments. The neighboring protective segments contact each other and partially overlap along an axial direction of the inner tube **1,** such that the metal layer **2** is formed in a winding manner.

However, when a user operates a brake cable for bending the bicycle cable housing, the protective segments are unable to move freely due to the adjacent protective segments of the metal layer **2** that are partially overlapped. In addition, the metal layer **2** of the conventional bicycle cable housing is made of steel material, which is a heavy material. Therefore, if the user needs to ride for a long-distance route, the overall weight of the completely assembled bicycle easily causes a heavy burden and muscle fatigue of the user. Further, for requiring a faster speed which is needed in a road cycling race, a substantial improvement for decreasing the overall weight of the bicycle is needed.

Moreover, a bicycle, which is one kind of leisure sport transportation equipment nowadays, becomes a must have for people in the modern life. Also, pursuing energy conservation, carbon reduction, and environment protection is a mainstream trend in the present time and the future.

Nevertheless, using the steel material to manufacture bicycles in the world has lasted for more than fifty years. Compared to steel material, aluminum material is softer and easier to deform, such that fractures and inconsistent outer diameters issues prevent the aluminum material from being overlapped and wind up to form the bicycle cable housing during the winding process. Therefore, it is necessary to take a bold step ahead from the traditional concept and thinking, thereby improving the related techniques and breaking through the technical and material limitation.

### SUMMARY OF THE INVENTION

For improving the issues above concerning the conventional selections of the material and techniques for manufacturing a bicycle cable housing, an improved structure of bicycle cable housing is provided. The metal layer inside the bicycle cable housing is formed of an aluminum layer, and the aluminum layer is not overlapped during the winding process. As a result, the overall weight of bicycle is decreased, so as to break through the overall lightweight limitation of a bicycle. Thus, the user is allowed to flexibly control the direction and balance of the bicycle during the operation process.

An improved structure of bicycle cable housing in accordance with an embodiment of the present invention is provided, including an inner tube and an aluminum layer. The aluminum layer is disposed around an outer wall of the inner tube, wherein aluminum layer is formed by winding an aluminum metal strip. During the winding process, the aluminum metal strip is wound around the inner tube along an axial direction of the inner tube to form a plurality of protective segments. Two neighboring protective segments are in contact with each other but do not overlap each other.

Therefore, the bicycle cable housing in accordance with the present invention is lightened, further achieving a flexible control of the direction and balance of the bicycle by use of the aluminum layer which is wound in a contacting but not overlapping manner. Moreover, during a long-distance riding, the hand and leg muscle fatigue of the user are relieved. Also, the advantage of a faster speed is achieved, which is needed for a road cycling race.

### BRIEF DESCRIPTION OF THE DRAWINGS

**Fig. 1** is a partially sectional view of a conventional bicycle cable housing.
**Fig. 2** is a schematic view of the conventional bicycle cable housing, illustrating the bending status of a conventional bicycle cable housing.
**Fig. 3** is a perspective view of the bicycle cable housing in accordance with an embodiment of the present invention.
**Fig. 4** is a partially sectional view of the bicycle cable housing of taken along line **4-4** in **Fig. 3****.**
**Fig. 5** is a schematic view of the bicycle cable housing in accordance with an embodiment of the present invention, illustrating the bending status of the bicycle cable housing.
**Fig. 6** is a perspective view of the bicycle cable housing in accordance with another embodiment of the present invention

### DETAILED DESCRIPTION OF THE INVENTION

The aforementioned and further advantages and features of the present invention will be understood by reference to the description of the preferred embodiment in conjunction with the accompanying drawings where the components are illustrated based on a proportion for explanation but not subject to the actual component proportion.

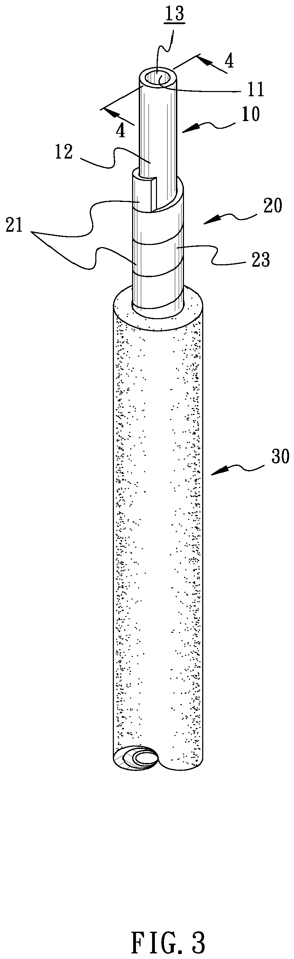

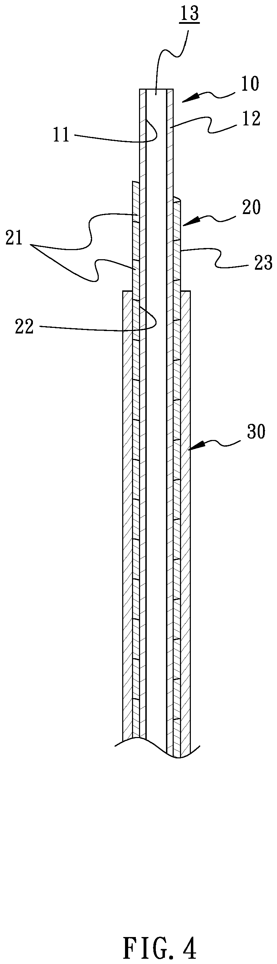

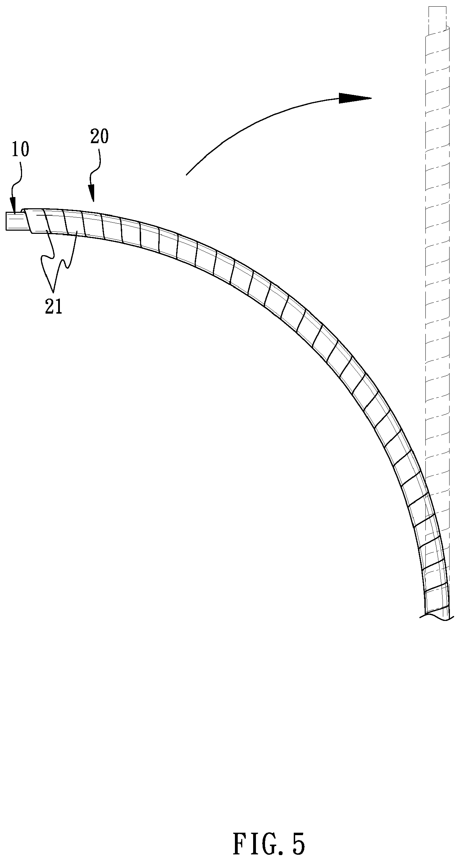

Referring to **Fig. 3** to **Fig. 6****,** an improved structure of bicycle cable housing in accordance with an embodiment of the present invention is provided, including an inner tube **10,** an aluminum layer **20,** and a surface protection layer **30.** The inner tube **10** is wrapped by the aluminum layer **20** and the surface protection layer **30.** The aluminum layer **20** is disposed, for example but not limited to, between the inner tube **10** and the surface protection layer **30.** The improved structure of bicycle cable housing in accordance with the present invention is also allowed to be formed by only the inner tube **10** and the aluminum layer **20,** with the outer surface of the aluminum layer **20** being anodized to form an antioxidant layer thereon. Moreover, the aluminum layer **20** is allowed to be colorized according to user demand, and then wrapped by a transparent surface protection layer **30,** achieving an aesthetically appealing appearance.

The inner tube **10,** which is a straight and hollow tube body, is able to be made of a plastic materials selected from the group consisting of polypropylene (PP), polyethylene (PE), polyvinyl chloride (PVC), and nylon. The inner tube **10** includes an inner wall **11** and an outer wall **12.** The inner wall **11** is provided with an inner space **13** for housing gear cables or brake cables of the bicycle, so as to provide a protection upon such cables.

The outer wall **12** of the inner tube **10** is wrapped by the aluminum layer **20.** In an embodiment of the present invention, the aluminum layer **20** is formed by a wound aluminum metal strip, as shown in **Fig. 3** to **Fig. 5****.** The aluminum metal layer is spirally wound by a wire flattening machine which drives the metal strip to wind along an axial direction of the inner tube **10,** so as to form a plurality of protective segments **21.** Two neighboring protective segments **21** are disposed against each other and not overlapped. Each protective segment **21** is provided with an inner wall surface **22** and an outer wall surface **23,** wherein the inner wall surface **22** is attached to the outer wall **12** of the inner tube **10.** Therefore, with the neighboring protective segments **21** disposed against each other and not overlapped, the bending degree of the overall inner tube **10** is substantially increased when a user operates the brake of the bicycle. Thus, the user is able to control and change the directions and angles of the bicycle according to user demand.

The outer wall surface **23** of each protective segment **21** is wrapped by the surface protection layer **30.** According to the embodiment of the present invention, the surface protection layer **30** is made of a material selected from a group consisting of polypropylene, polyvinyl chloride, nylon, and synthetic polymers. The thickness of the surface protection layer **30** is larger than the thickness of the inner tube **10** and the aluminum layer **20.** The surface protection layer **30** is provided in the purpose of protecting and preventing the aluminum layer **20** from being rusted upon exposure to the external environment. Also, the strength and aesthetic appearance of the overall improved structure of bicycle cable housing are enhanced. In addition, the tensile strength of the improved structure of bicycle cable housing reaches 200 to 240 kilograms in the test, thus meeting the 150 kilograms requirement of the CNS bicycle standard.

Furthermore, the second embodiment of the present invention is provided. The elements of another embodiment same as the aforementioned embodiment are shown with identical symbols, and the description of the second embodiment similar to the aforementioned embodiment is omitted. The differences between the first embodiment and the second embodiment are illustrated as following.

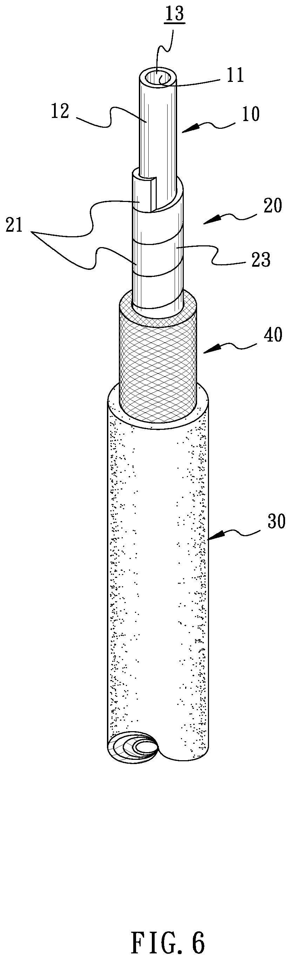

Referring to **Fig. 6****,** an improved structure of bicycle cable housing in accordance with another embodiment of the present invention is provided, comprising the inner tube **10,** the aluminum layer **20,** and the surface protection surface layer **30** as described above, and further comprising a reinforcement layer **40** sandwiched between the aluminum layer **20** and the surface protection surface layer **30.**

The reinforcement layer **40** is made of a material selected from the group consisting of chemical fiber and kevlar fiber, wherein the chemical fiber refers to tetoron or nylon. In the embodiment of the present invention, the reinforcement layer **40** is surroundingly provided on the outer wall surface **23** of the aluminum layer **20** in a way of mesh weaving or annular wrapping. Then, the outer surface of the reinforcement layer **40** is entirely wrapped by the surface protection surface layer **30.** As a result, the structural strength of the overall improved structure of bicycle cable housing is enhanced. Also, the reinforcement layer **40** may be colorized depending on the user demand, so as to achieve an aesthetically appealing appearance of the overall improved structure of bicycle cable housing.

To sum up, the weight of the overall aluminum layer **20** is 0.024 kilograms per meter compared to the traditional steel material whose weight is 0.058 kilogram per meter. Thus, the weight of the aluminum layer **20** is lighter than the traditional steel material by 58.6%. The tested tensile strength of the improved structure of bicycle cable housing is above 150 kilograms, which conforms to the CNS standard. With the neighboring protective segments **21** being disposed against each other and not overlapped, the user is able to easily control and change the directions and angles of the bicycle according to user demand. When a user rides for a long-distance route, hand and leg muscle fatigue are relieved. Also, a faster speed is achieved for a road cycling race.

Although particular embodiments of the invention have been described in detail for purposes of illustration, various modifications and enhancements may be made without departing from the spirit and scope of the invention. Accordingly, the invention is not to be limited except as by the appended claims.

## Claims

1. An improved structure of bicycle cable housing, comprising:
an inner tube (10); and
an aluminum layer (20) disposed on an outer wall (12) of the inner tube (10) and formed of a wound aluminum metal strip; the aluminum metal strip is wound around the inner tube (10) along an axial direction to form a plurality of protective segments (21); two neighboring protective segments (21) are in contact with each other but not overlapped.

2. The improved structure of bicycle cable housing of claim 1, wherein each protective segment (21) is provided with an inner wall surface (22) and an outer wall surface (23); the inner wall surface (22) is attached to the outer wall (12) of the inner tube (10).

3. The improved structure of bicycle cable housing of claim 2, further comprising a surface protection layer (30) disposed around the outer wall surfaces (23) of the protective segments (21); a thickness of the surface protection layer (30) is larger than a thickness of the inner tube (10) and the aluminum layer (20).

4. The improved structure of bicycle cable housing of claim 3, wherein the surface protection layer (30) is made of a synthetic polymer material selected from a group consisting of polypropylene, polyvinyl chloride, and nylon.

5. The improved structure of bicycle cable housing of claim 3, further comprising a reinforcement layer (40) sandwiched between the aluminum layer (20) and the surface protection surface layer (30); the reinforcement layer (40) is selected from a group consisting of chemical fiber and kevlar fiber.

6. The improved structure of bicycle cable housing of claim 1, wherein the inner tube (10) is made of a synthetic polymer material selected from a group consisting of polypropylene, polyethylene, polyvinyl chloride, and nylon.
